# EUROPÄISCHE PATENTSCHRIFT

(11) **EP 0 470 296 B1**
(45) Veröffentlichungstag und Bekanntmachung des Hinweises auf die Patenterteilung: **29.01.1997**
(21) Anmeldenummer: 90124709.8
(22) Anmeldetag: 19.12.1990
(51) Int. Cl.: A47B 96/14, B65G 1/02

(54) **Freiträger-Lagergestell**
Cantilever rack
Ratelier avec supports en porte à faux

(30) Priorität: 09.08.1990 CH 2604/90
(43) Veröffentlichungstag der Anmeldung: 12.02.1992
(73) Patentinhaber: Elvedi, Walter A., CH-8600 Dübendorf (CH)
(72) Erfinder: Elvedi, Walter A., CH-8600 Dübendorf (CH)
(74) Vertreter: Althoff, Gerhard

(56) Entgegenhaltungen:
- DE-U- 8 901 182
- DE-U- 8 912 420
- US-A- 3 512 654

## Beschreibung

Die Erfindung bezieht sich auf ein Lagergestell, insbesondere auf ein ein- oder doppelseitig belastbares Freiträger-Lagergestell mit mindestens zwei im Abstand zueinander angeordneten Standsäulen, welche durch Verstrebungen miteinander verbunden sowie mittels auslegerartig ausgebildeter Fusselemente am Boden abgestützt sind, wobei die einzelne Standsäule zwei Vertikalträger umfasst, welche jeweils an den parallel zueinander angeordneten Seitenwänden mit in vertikaler Richtung beabstandeten Ausnehmungen für die lösbare Halterung mindestens eines Tragarmes versehen sind und durch mindestens zwei in vertikaler Richtung im Abstand zueinander angeordnete Abstandhalter derart miteinander verbunden sind, dass die zur Anlage der jeweils durch mindestens einen in die Ausnehmungen eingeführten Steckbolzen gehaltenen Tragarme vorgesehenen Stirnwände der Vertikalträger in vertikaler Richtung nach oben rückwärts geneigt zueinander angeordnet sind.

Aus der DE-U 8 912 420 ist eine Lagervorrichtung bekannt, welche im wesentlichen zwei im Abstand zueinander angeordnete und jeweils mittels Horizontalträger am Boden abgestützte sowie durch eine angeschraubte Verstrebung miteinander verbundene Standsäulen aufweist, wobei die einzelne Standsäule zwei mittels in vertikaler Richtung beabstandeter Querglieder derart miteinander verbundene Profilträger umfasst, dass diese beidseitig eine in vertikaler Richtung nach oben rückwärts geneigte Stirnwand bilden, an welcher in vertikaler Richtung im Abstand zueinander und mittels einsteckbarer Keile am Profilträger gehaltene Kragarme angeordnet sind. Der Profilträger hat an der als Anlagefläche für die Kragarme ausgebildeten Stirnwand eine sich über die gesamte Länge erstreckende, dreimal haarnadelförmig umgebogene Längssicke und an den parallel zueinander angeordneten Schenkeln entweder eine zweimal haarnadelförmig umgebogene Endsicke oder eine abgekröpfte Anlagekante für die Halterung der Querglieder. Die spezielle Ausgestaltung des im Rollverfahren hergestellten Profilträger ist nicht nur relativ kostenaufwendig, sondern es besteht auch die Möglichkeit, dass bei entsprechender Lastaufnahme durch die Kragarme eine lokale, im wesentlichen nach innen des jeweiligen Profilträgers orientierte Verformung beziehungsweise ein Einknicken der Stirnwand und dadurch eine Schwächung des kompletten Lagersystems entstehen kann. Zudem bilden die einzelnen Sicken, insbesondere aber die an der Stirnwand angeordnete Längssicke die Möglichkeit einer unerwünschten Ansammlung von Schmutz.

Aus der US-A 3,512,654 ist ein Regal bekannt, welches zwei im Abstand zueinander angeordnete und durch Querstreben miteinander verbundene Standsäulen umfasst. Die einzelne Standsäule hat zwei im Profilquerschnitt U-förmig ausgebildete und mit den Schenkeln gegeneinander liegende Profilkörper, welche im wesentlichen durch mehrere in vertikaler Richtung im Abstand zueinander angeordnete und die beiden Profilkörper klauenförmig umgreifende sowie mittels die einzelne Standsäule durchdringender Bolzen gegeneinander verschraubt sind.

In Verbindung mit einer Lagervorrichtung ist weiterhin aus der DE-U 8 901 182 ein als Pfosten ausgebildetes Trägerelement bekannt, welches an seinem Steg zum lösbaren Klemmen einer Klaue ein oder mehrere schräg nach unten zur Mitte des Trägerelements orientierte Langlöcher aufweist, die jeweils zum Einsetzen eines die Schenkel sowie den Steg durchdringenden Bolzens ausgebildet sind.

Der Erfindung liegt die Aufgabe zugrunde, für die Standsäulen eines Lagergestells gemäss der im Oberbegriff des Patentanspruchs 1 genannten Gattung den einzelnen Vertikalträger so zu verbessern, dass dieser unter Beibehaltung der erforderlichen Steifigkeit und Stabilität wirtschaftlicher herstellbar und montierbar ist und dennoch eine ästhetische Formgestaltung mit weitgehend ebenflächigen Stirn- und Seitenflächen erhält.

Zur Lösung dieser Aufgabe führt, dass die im Abstand zueinander angeordneten Vertikalträger je zwei ⊂-förmige, gleichsinnig zueinander angeordnete und mittels zwei einander zugewandter sowie aneinanderliegender innerer Schenkel miteinander verbundene Profilkörper umfasst, wobei die einzelnen Profilkörper an den etwa parallel zu den inneren Schenkeln orientierten und mit den in vertikaler Richtung beabstandeten Ausnehmungen versehenen äusseren Schenkeln je mit einem in bezug dazu einmal umgebogenen Teilstück versehen sind, an welchen die zur Bildung der einzelnen Standsäule in vertikaler Richtung im Abstand zueinander angeordneten Abstandhalter hintergreifend anliegend angeordnet und befestigt sind.

Hierdurch ist es möglich, die Profilkörper für die einzelne Standsäule in dem an sich bekannten und wirtschaftlichen Abkantverfahren herzustellen und durch die in vertikaler Richtung orientierte Schweissverbindung miteinander zu verbinden, ohne dass dadurch ein nachträgliches Ausrichten erforderlich wird.

Bevorzugt sind die inneren, in zusammengebautem und verschweisstem Zustand aneinanderliegenden Schenkel des einzelnen Profilkörpers kleiner als die äusseren Schenkel ausgebildet, wodurch einerseits die Steifigkeit erhöht wird. Die beiden inneren Schenkel sind vorzugsweise so bemessen, dass die zur Halterung der Tragarme einschiebbaren Steckbolzen ausschliesslich in den korrespondierend zueinander angeordneten Ausnehmungen der äusseren Schenkel gelagert sind.

Weiterhin gewährleistet die bevorzugte Ausgestaltung der Befestigung der Fusselemente an der jeweiligen Standsäule, dass sowohl die bei der Montage und auch bei Belastung eine Verformung der Profilkörper der einzelnen Standsäule sowie der Profilkörper der daran angeschraubten Fusselemente ausgeschlossen ist.

Weitere Merkmale der Erfindung ergeben sich aus der folgenden Beschreibung in Verbindung mit dem in der Zeichnung dargestellten Ausführungsbeispiel und den weiteren Patentansprüchen.

Die Erfindung wird nachstehend anhand der Zeichnung beschrieben. Es zeigt:
- Fig.1: ein in perspektivischer Ansicht dargestelltes Lagergestell mit drei im Abstand zueinander angeordneten Standsäulen,
- Fig.2: das in Seitenansicht dargestellte Lagergestell gemäss Fig.1,
- Fig.3: eine in Ansicht dargestellte Standsäule für das Lagergestell gemäss Fig.1,
- Fig.4: die in Seitenansicht gemäss Pfeilrichtung X in Fig.3 dargestellte Standsäule,
- Fig.5: die gemäss der Linie V-V in Fig.3 im Profilquerschnitt dargestellte Standsäule,
- Fig.6: ein gemäss Pfeilrichtung X' in Fig.2 in Seitenansicht dargestelltes Fusselement mit der daran angeordneten und befestigten Standsäule des Lagergestells, und
- Fig.7: eine Variante der Befestigung der Standsäule am Fusselement.

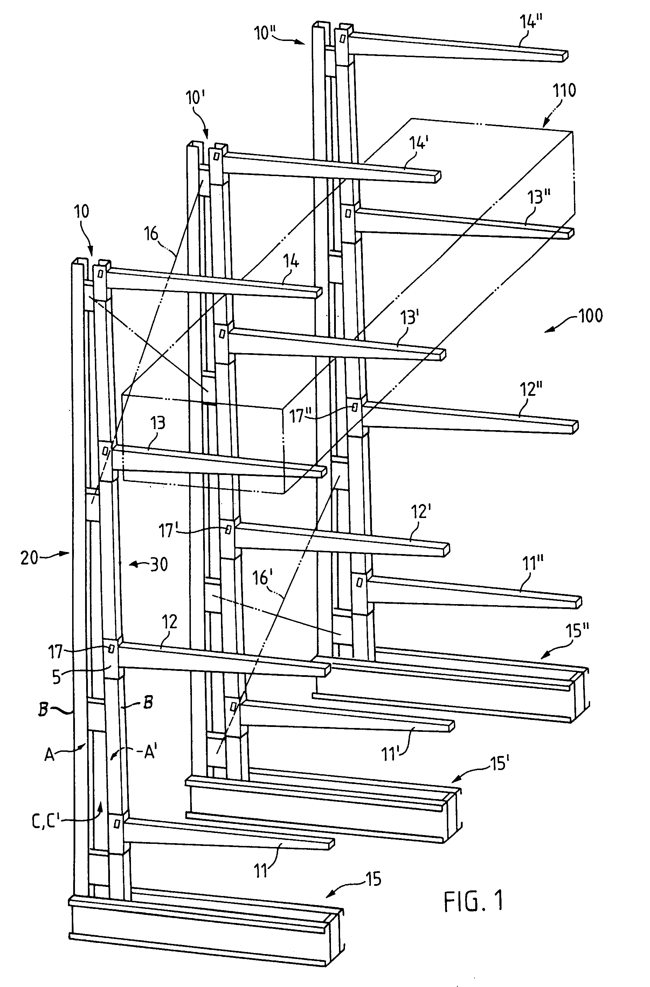

Fig.1 zeigt in perspektivischer Seitenansicht ein in der Gesamtheit mit 100 bezeichnetes Lagergestell, welches im dargestellten Ausführungsbeispiel als einseitig belastbares Freiträger-Lagergestell zur Aufnahme einer schematisch dargestellten Last 110 ausgebildet ist.

Das Lagergestell 100 umfasst im dargestellten Ausführungsbeispiel drei im Abstand zueinander angeordnete Standsäulen 10, 10' und 10'', welche jeweils mit einem orthogonal dazu angeordneten und entsprechend ausgebildeten Fusselement 15,15' und 15'' am Boden abgestützt sind.

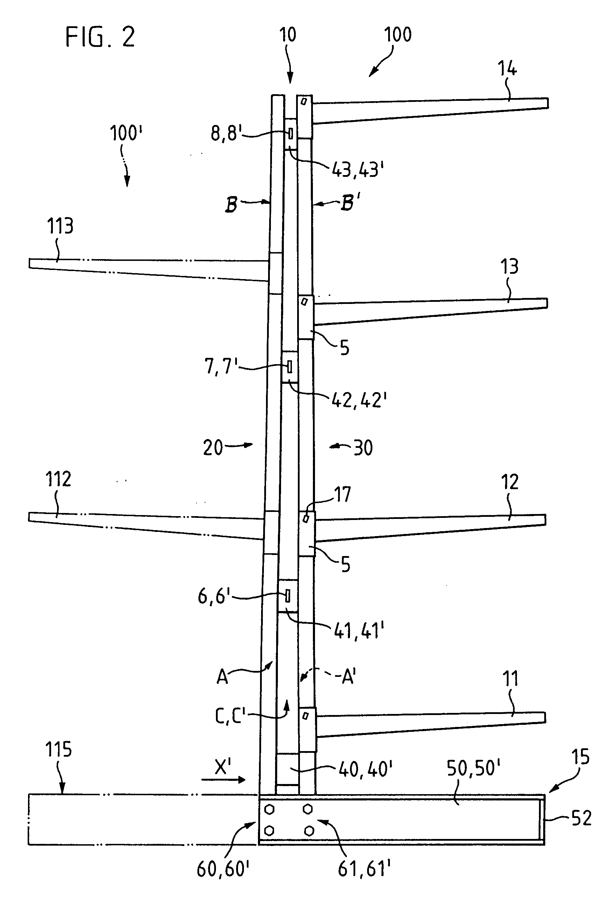

Zwischen den einzelnen Standsäulen 10 und 10' sowie 10' und 10'' ist jeweils mindestens eine, die einzelnen Standsäulen miteinander verbindende, schematisch dargestellte Verstrebung 16,16' vorgesehen. Die als Stabilisierung des Lagergestells 100 ausgebildeten und in Fig.1 durch die strichpunktierten Linien dargestellten Verstrebungen 16 und 16' sind vorzugsweise höhenversetzt zueinander zwischen den einzelnen Standsäulen 10,10' und 10'' angeordnet und befestigt. Die Befestigung der Verstrebungen 16,16' an in vertikaler Richtung beabstandeten und mit entsprechenden Laschen 6,6' und 7,7' sowie 8,8' (Fig.2) versehenen und an den Standsäulen 10,10' ,10'' angeordneten Abstandhaltern erfolgt beispielsweise durch eine nicht näher dargestellte Schraub- oder Schweissverbindung.

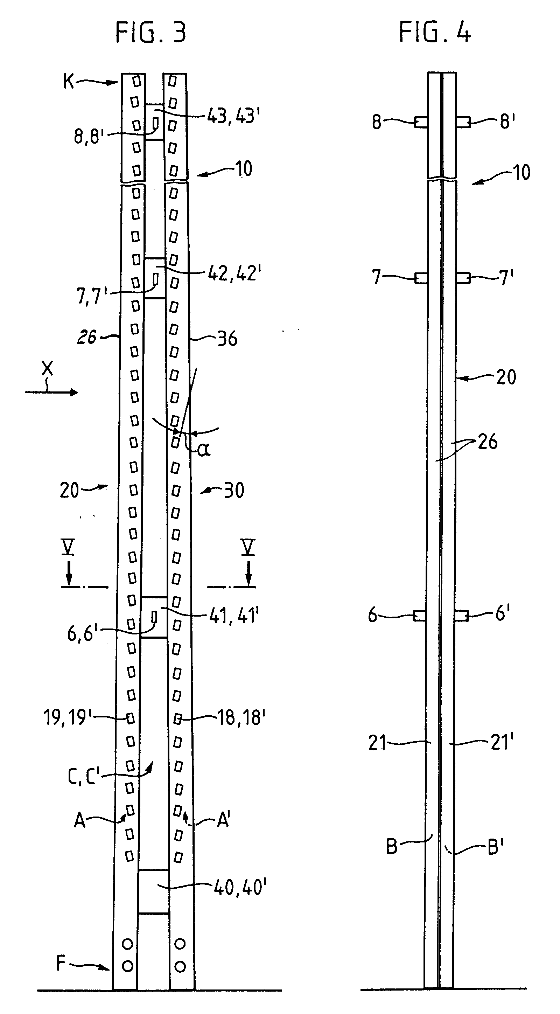

Im dargestellten Ausführungsbeispiel sind an jeder einzelnen Standsäule 10;10' und 10'' vier in der Höhe versetzt zueinander angeordnete Tragarme 11,12,13,14 und 11',12',13',14' sowie 11'',12'',13'',14'' angeordnet und jeweils durch mindestens einen schematisch dargestellten Steckbolzen 17,17',17'' gehalten. Zur stufenweisen Verstellung der Tragarme und zur Aufnahme der in Fig.1 an jeder Standsäule nur einmal bezeichneten Steckbolzen 17,17',17'' ist jede einzelne Standsäule 10, 10'und 10'', wie in Fig.3 schematisch dargestellt, in vertikaler Richtung mit in Abständen zueinander verteilt, angeordneten und entsprechend ausgebildeten Ausnehmungen 18,18' und 19,19' oder Durchbrüchen versehen. Die in Verbindung mit Fig.3 noch zu beschreibenden Ausnehmungen in den einzelnen Vertikalträgern 20,30 der Standsäulen 10,10',10'' sind dabei korrespondierend zueinander angeordnet, so dass beim Anbringen der einzelnen Tragarme 11,12,13,14 und 11',12',13',14' sowie 11'',12'',13'',14'' die ohne weitere Hilfmittel einsteckbaren Steckbolzen 17,17', 17'' die entsprechende Standsäule im wesentlichen quer zur vertikalen Richtung durchdringen.

In Fig.2 ist das Lagergestell 100 in Seitenansicht dargestellt und man erkennt die Standsäule 10 mit den seitlich daran sowie in vertikaler Richtung im Abstand zueinander angeordneten Tragarmen 11,12,13 und 14 sowie das Fusselement 15.

Die Standsäule 10 ist beispielsweise durch eine Schraubverbindung 60,60';61,61' am Fusselement 15 befestigt. Das Fusselement 15 hat zwei am Boden abgestützte Längsträger 50,50' und ist an seiner Stirnseite in nicht näher dargestellter Weise mit einer Platte 52 verschlossen. Die Fusselemente 15',15'' (Fig.1) sind analog ausgebildet.

Die spezielle Ausgestaltung der Schraubverbindungen 60, 60' und 61,61' für die Befestigung der Standsäule 10 am Fusselement 15 wird später noch in Verbindung mit Fig.6 im einzelnen beschrieben. An dieser Stelle wird darauf hingewiesen, dass die beiden Standsäulen 10' und 10'' mit den einzelnen daran angeordneten Fusselementen 15' und 15' analog ausgebildet sind.

Wie in Fig.2 durch die strichpunktierten Linien schematisch dargestellt, sind bei einer Variante an der Standsäule 10 zwei weitere, in vertikaler Richtung im Abstand zueinander angeordnete Tragarme 112,113 sowie ein zweites Fusselement 115 vorgesehen. Bei diesem Ausführungsbeispiel ist das aus den einzelnen, in Reihe angeordneten Standsäulen und mit den Tragarmen 11,12,13,14 und 112,113 versehene Lagergestell 100' als zweiseitig belastbares Freiträger-Lagergestell ausgebildet.

In Fig.3 ist die Standsäule 10 in Ansicht dargestellt und man erkennt einen ersten Vertikalträger 20 sowie einen zweiten Vertikalträger 30. Die beiden Vertikalträger 20,30 sind durch die in vertikaler Richtung in entsprechenden Abständen zueinander angeordneten Abstandhalter 40,40';41,41';42,42' und 43,43' derart miteinander verbunden, dass die beiden Vertikalträger 20 und 30 ausgehend vom Fussteil F die mit einem Spalt C sich nach oben zum Kopfteil K verjüngende Standsäule 10 bilden.

Durch den vom Fussteil F nach oben zum Kopfteil K sich verjüngenden Spalt C,C' sind die zur Anlage der einzelnen Tragarme 11 bis 14 sowie 112,113 (Fig.2) vorgesehenen Stirnwände B,B' der Vertikalträger 20,30 zwangsläufig in vertikaler Richtung nach oben rückwärts zueinander angeordnet.

An den Abstandhaltern 41,41';42,42' und 43,43' sind die Laschen 6,6';7,7' und 8,8' angeordnet, welche für die Befestigung der in Fig.1 schematisch dargestellten Verstrebung 16,16' vorgesehen und ausgebildet sind.

In jedem Vertikalträger 20,30 sind in vertikaler Richtung und in gleichmässigen, nicht näher bezeichneten Abständen zueinander angeordnete Ausnehmungen vorgesehen, wobei die Ausnehmungen in dem einen Vertikalträger 30 generell mit 18, 18' und in dem anderen Vertikalträger 20 generell mit 19,19' bezeichnet sind.

Die einzelne Ausnehmung 18,18' bzw. 19,19' ist mit ihrer nicht näher bezeichneten Innenkante in bezug zu der Aussenkante 36 bzw. 26 des jeweiligen Profilträgers 31,31' bzw. 21,21' des Vertikalträgers 30 bzw. 20 unter einem Winkel α in der Grössenordnung von 8° bis 12° angeordnet. Der Winkel α wird beispielsweise mit 10° gewählt, so dass der einzelne, mit einem entsprechend ausgebildeten Halteteil 5 (nur einmal in Fig.2 bezeichnet) versehene Tragarm 12 mit einer vorgegebenen, geringfügig nach oben gerichteten Schräge am Vertikalträger 30 bzw. 20 angeordnet und durch den Steckbolzen 17' in seiner Lage gehalten ist.

In Fig.4 ist die Standsäule 10 in Seitenansicht gemäss Pfeilrichtung X (Fig.3) dargestellt und man erkennt den einen aus zwei Profilkörpern 21,21' gebildeten vertikalträger 20 sowie die in vertikaler Richtung im Abstand zueinander an den Abstandhaltern 41,41';42,42' und 43,43' angeordneten Laschen 6,6';7,7' und 8,8' für die Verstrebungen 16,16' (Fig.1).

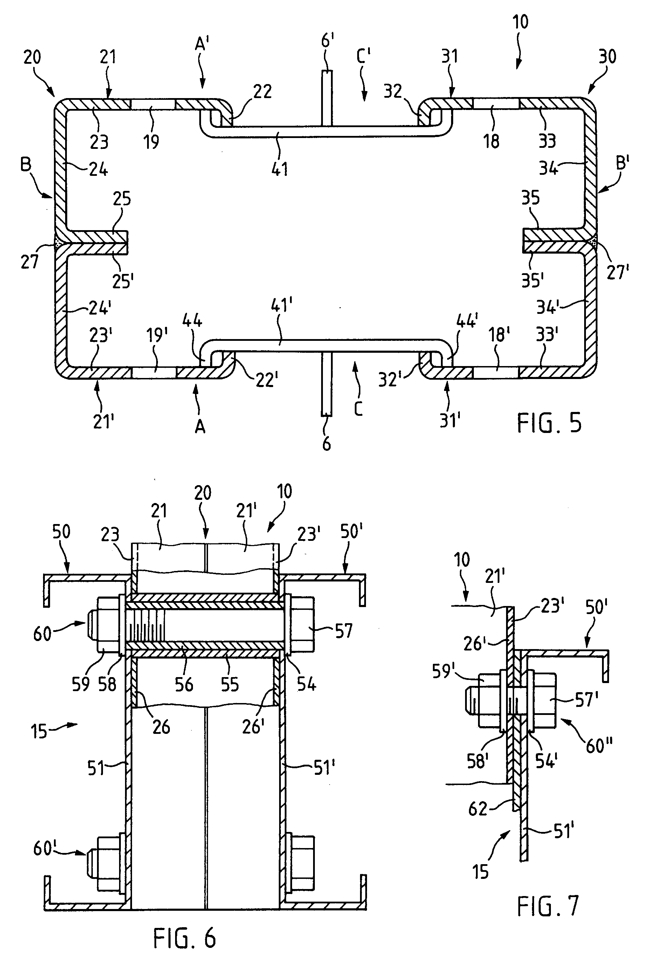

Fig.5 zeigt die Standsäule 10 im Profilquerschnitt gemäss der Linie V-V in Fig.3 in grösserem Massstab und man erkennt die ebenfalls im Profilquerschnitt dargestellten Profilkörper 21, 21' des einen Vertikalträgers 20 und die Profilkörper 31,31' des anderen Vertikalträgers 30 sowie die die beiden Vertikalträger 20 und 30 miteinander verbindenden Abstandhalter 41 und 41'. Der einzelne Abstandhalter 41,41' liegt dabei mit entsprechend umgebogenen Teilstücken 44,44' (nur einmal bezeichnet) an der nicht bezeichneten Innenseite der Profilkörper 21,21' und 31,31' an. Die in vertikaler Richtung an der Standsäule 10,10',10'' angeordneten Abstandhalter 40,40';41,41';42,42';43,43' sind in nicht näher dargestellter Weise an den Profilkörpern 21,21' und 31, 31' befestigt.

Der Vertikalträger 20 umfasst den ersten und den zweiten Profilkörper 21,21'. Im Profilquerschnitt ist der Profilkörper 21 im wesentlichen [-förmig ausgebildet und hat zwei parallel zueinander angeordnete Schenkel 23 und 25 sowie einen die Schenkel 23,25 miteinander verbindenden Flansch 24. Der eine Schenkel 23 ist an seinem freien Ende beispielsweise mit einem umgebogenen Teilstück 22 versehen und in bezug zu dem gegenüberliegenden Schenkel 25 etwas grösser ausgebildet.

Der Vertikalträger 30 umfasst den ersten und den zweiten Profilkörper 31,31', wobei die aus den einzelnen Teilen gebildeten Profilkörper 31,31' analog dem vorstehend beschriebenen Profilkörper 21,21' ausgebildet sind, welche die Teile 22',23',24' und 25' beziehungsweise die Teile 32,32';33,33'; 34,34' und 35,35' umfassen.

Weiterhin erkennt man in Fig.5 die in den Schenkeln angeordneten Ausnehmungen 18,18' in dem Vertikalträger 30 sowie die Ausnehmungen 19,19' in dem Vertikalträger 20. Die inneren, gegeneinanderliegenden Schenkel 25,25' bzw. 35,35' der beiden Vertikalträger 20 und 30 sind kleiner als die beiden äusseren Schenkel 23,23' bzw. 33,33' ausgebildet. Die in den äusseren Schenkeln 23,23' bzw. 33,33' angeordneten Ausnehmungen 18,18' bzw. 19,19' sind mit ihrer entsprechenden Innenkante (nicht bezeichnet) korrespondierend zu der jeweiligen Vorderkante (nicht bezeichnet) der inneren Schenkel 25,25' bzw. 35,35' angeordnet.

Die beiden gegenüberliegenden Profilkörper 21,31 sind durch den Abstandhalter 41 und die Profilkörper 21',31' durch den Abstandhalter 41' miteinander verbunden und bilden im wesentlichen die beiden gegenüberliegenden und mit A und A' bezeichneten und parallel zueinander angeordneten Seitenwände der Standsäule 10. In zusammengebautem Zustand werden die beiden kürzeren Schenkel 25,25' der Profilkörper 21,21' und die beiden kürzeren Schenkel 35,35' der Profilkörper 31,31' durch eine in vertikaler Richtung orientierte Schweissverbindung im Bereich der beiden Stoss-Stellen 27,27' der Flanschen 24,24' miteinander verbunden Fig.5. Die beiden Flanschen 24 und 24' bilden im wesentlichen die beiden gegenüberliegenden sowie in vertikaler Richtung nach oben rückwärts geneigt zueinander angeordneten und mit B und B' bezeichneten Stirnwände der Standsäule 10.

Wie in Fig.5 dargestellt, umfasst der Vertikalträger 20 die beiden Profilkörper 21,21' und der Vertikalträger 30 die beiden Profilkörper 31,31', wobei die beiden Vertikalträger 20, 30 mit den daran angeordneten und befestigten Abstandhaltern 40,40';41,41';42,42' und 43,43' und mit dem entsprechend befestigten Fusselement 15 (nicht dargestellt) zusammen die als eine Baueinheit ausgebildete Standsäule 10 bilden.

Fig.6 zeigt das gemäss Pfeilrichtung X' in Fig.2 in Seitenansicht dargestellte Fusselement 15 sowie ein Teilstück der beispielsweise lösbar daran befestigten Standsäule 10. Als Ausführungsbeispiel wird nachstehend nur die eine Schraubverbindung 60,60' beschrieben. Die zweite im Abstand dazu angeordnete Schraubverbindung 61,61' ist analog ausgebildet.

Das in der Gesamtheit mit 15 bezeichnete Fusselement hat die beiden Längsträger 50,50', welche im Profilquerschnitt im wesentlichen [-förmig ausgebildet und mit ihren vertikalen Stegen 51,51' gegeneinander gerichtet, im Abstand zueinander angeordnet sind. Zwischen den beiden Längsträgern 50,50' ist die Standsäule 10 angeordnet und man erkennt die beiden Profilkörper 21,21' des einen Vertikalträgers 20.

Zur besseren Darstellung der einzelnen Schraubverbindung 60 sind die beiden Profilkörper 21,21' im oberen Bereich aufgebrochen und teilweise im Schnitt dargestellt. Die einzelne Schraubverbindung 60 umfasst im wesentlichen einen Gewindebolzen 57, eine Mutter 59 mit entsprechend zugeordneten Unterleg-Scheiben 54,58 sowie zwei koaxial ineinander gesteckte Distanzhülsen 55,56. Die erste Distanzhülse 55 ist dabei zwischen den gegenüberliegenden Schenkeln 23,23' der Profilkörper 21,21' angeordnet und reicht von der einen Innenwand 28 bis zur anderen Innenwand 28'. Die erste Distanzhülse 55 wird von der zweiten Distanzhülse 56 durchdrungen, wobei die zweite Distanzhülse 56 die Stege 51,51' der Längsträger 50,50' durchdringt und an beiden Enden mit der Aussenseite der Stege 51,51' abschliesst. Die erste Distanzhülse 55 kann beispielsweise durch eine Heftschweissung an der jeweiligen Innenwand 28,28' befestigt werden. Die im Abstand dazu angeordnete Schraubverbindung 60' sowie die Schraubverbindungen 61,61' (Fig.2) sind analog ausgebildet.

Mittels des die zweite Distanzhülse 56 durchdringenden Gewindebolzens 57 werden die beiden Längsträger 50,50' mit der dazwischen angeordneten Standsäule 10 fest verschraubt. Durch die besondere Ausgestaltung der Schraubverbindung 60, 60' und 61,61' wird eine stabile Verbindung der Standsäule 10 mit dem Fusselement 15 erreicht, ohne dass bei der Montage durch die Wirkung der Schraubkraft eine Verformung der Längsträger 50,50' und der dazwischen angeordneten Vertikalträger 20,30 erfolgt.

Fig.7 zeigt in Schnittansicht und als Ausschnitt eine Variante der Befestigung 60'' der Standsäule 10 am Fusselement 15 und man erkennt den einen Längsträger 50', ein Teilstück der Standsäule 10 sowie den Gewindebolzen 57' mit der Unterleg-Scheibe 54'. Bei diesem Ausführungsbeispiel ist zwischen dem Schenkel 23' des Profilkörpers 21' und dem Steg 51' des Längsträgers 50' eine entsprechend ausgebildete Verstärkungsplatte 62 vorgesehen. Die Verstärkungsplatte 62 kann entweder am Steg 51' des Längsträgers 50' oder aber am Schenkel 23' des Profilkörpers 21' durch eine entsprechende Heft-Schweissung befestigt werden. Bei einem nicht dargestellten Ausführungsbeispiel kann zusätzlich auf der der Unterleg-Scheibe 54' zugewandten Seite des Steges 51' eine weitere Verstärkungsplatte 62 angeordnet werden.

Abweichend von der Befestigung gemäss Fig.6 sind bei der in Fig.7 dargestellten Ausführung keine Distanzhülsen 55,56 vorgesehen und der Gewindebolzen 57' wird mit der Scheibe 58' und Mutter 59' direkt mit dem Schenkel 23' des Profilkörpers 21' verschraubt.

Bei der Schraubverbindung gemäss Fig.6 sind somit vier, die Teile 20,50,50' durchdringende und an der jeweiligen Aussenseite verschraubte Gewindebolzen 57 erforderlich.

Bei der Schraubverbindung gemäss Fig.7 sind acht Gewindebolzen 57' erforderlich, welche lediglich den Steg 51' des Längsträgers 50' sowie den Schenkel 23' des Profilkörpers 21' durchdringen und an der Innenwand 28' verschraubt sind.

## Patentansprüche

1. Lagergestell, insbesondere ein- oder doppelseitig belastbares Freiträger-Lagergestell (100) mit mindestens zwei im Abstand zueinander angeordneten Standsäulen (10;10'), welche durch Verstrebungen (16;16') miteinander verbunden sowie mittels auslegerartig ausgebildeter Fusselemente (15;15') am Boden abgestützt sind, wobei die einzelne Standsäule (10;10') zwei Vertikalträger (20;30) umfasst, welche jeweils an den parallel zueinander angeordneten Seitenwänden (A,A') mit in vertikaler Richtung beabstandeten Ausnehmungen (18,18';19,19') für die lösbare Halterung mindestens eines Tragarmes versehen sind und durch mindestens zwei in vertikaler Richtung im Abstand zueinander angeordnete Abstandhalter derart miteinander verbunden sind,dass die zur Anlage der jeweils durch mindestens einen in die Ausnehmungen eingeführten Steckbolzen (17) gehaltenen Tragarme (11,12,13,14) vorgesehenen Stirnwände (B, B') der Vertikalträger (20;30) in vertikaler Richtung nach oben rückwärts geneigt zueinander angeordnet sind, **dadurch gekennzeichnet**, dass die im Abstand zueinander angeordneten Vertikalträger (20;30) je zwei ⊂-förmige, gleichsinnig zueinander angeordnete und mittels zwei einander zugewandter sowie aneinanderliegender innerer Schenkel (25,25';35,35') miteinander verbundene Profilkörper (21,21';31,31') umfasst, wobei die einzelnen Profilkörper (21,21';31,31') an den etwa parallel zu den inneren Schenkeln (25,25';35,35') orientierten und mit den in vertikaler Richtung beabstandeten Ausnehmungen (18,18';19,19') versehenen äusseren Schenkeln (23,23'; 33,33') je mit einem in bezug dazu einmal umgebogenen Teilstück (22,22';32,32') versehen sind, an welchen die zur Bildung der einzelnen Standsäule (10;10') in vertikaler Richtung im Abstand zueinander angeordneten Abstandhalter (40,40'; 41,41';42,42';43,43') hintergreifend anliegend angeordnet und befestigt sind.

2. Lagergestell nach Anspruch 1, **dadurch gekennzeichnet**, dass die beiden Profilkörper (21,21';31,31') des einzelnen Vertikalträgers (20;30) im Bereich der äusseren Stossstellen (27;27') der aneinanderliegend angeordneten inneren Schenkel (25,25';35,35') durch eine in vertikaler Richtung der Vertikalträger (20; 30) orientierte Schweissverbindung, miteinander verbunden sind.

3. Lagergestell nach Anspruch 1, **dadurch gekennzeichnet**, dass die inneren, aneinanderliegenden Schenkel (25,25';35, 35') der Profilkörper (21,21';31,31') der beiden Vertikalträger (20;30') kleiner als die in parallelem Abstand dazu angeordneten äusseren Schenkel (21,21';31,31') ausgebildet sind, wobei die inneren Schenkel (25,25';35,35') derart bemessen sind, dass diese jeweils mit der Vorderkante korrespondierend zu der Innenkante der Ausnehmungen (18,18'; 19,19') angeordnet sind.

4. Lagergestell nach Anspruch 1, **dadurch gekennzeichnet**, dass die etwa rechteckig ausgebildeten Ausnehmungen (18,18'; 19,19') jeweils in bezug auf die rückwärts nach oben geneigte Aussenkante (26;36) des einzelnen Vertikalträgers (20;30) unter einem Winkel (α) geneigt angeordnet sind, wobei der Winkel (α) in der Grössenordnung zwischen 8° bis 12° gewählt ist.

5. Lagergestell nach Anspruch 1, mit den zu beiden Seiten der Profilkörper (21,21';31,31') der einzelnen Standsäule (10;10') angeordneten und durch mindestens eine Schraubverbindung daran befestigten und als Fusselemente (15;15') ausgebildeten Längsträgern (50;50), **dadurch gekennzeichnet**, dass die einzelne Schraubverbindung (60,60') eine in den Profilkörpern (21,21';31,31') gelagerte erste Distanzhülse (55) und eine diese durchdringende zweite Distanzhülse (56) sowie einen darin angeordneten Gewindebolzen (57) umfasst, mittels welchem die durch die erste Distanzhülse (55) im Abstand zueinander angeordneten Längsträger (50,50') miteinander verbunden und gegeneinander verspannt sind.

6. Lagergestell nach Anspruch 5, **dadurch gekennzeichnet**, dass die einzelne Schraubverbindung (60'') mindestens eine zwischen den Profilkörpern (21,21';31,31') und den Längsträgern (50,50') lose oder an den Profilkörpern (21,21';31,31') geheftet angeordnete Verstärkungsplatte (62) aufweist und die einzelnen Elemente miteinander verschraubt sind.

## Claims

1. A rack, in particular a cantilever rack (100), which can be loaded on one or two sides, with at least two mutually spaced columns (10; 10') which are connected to one another by cross braces (16; 16') and are supported on the ground by feet elements (15; 15') designed in the manner of outriggers, the individual column (10; 10') comprising two vertical beams (20; 30) which are each provided on the mutually parallel lateral walls (A, A') with vertically spaced recesses (18, 18'; 19, 19') for the detachable mounting of at least one carrier arm and are connected to one another by at least two vertically mutually spaced spacer members in such a way that the end walls (B, B') of the vertical beams (20; 30) provided for supporting the carrier arms (11, 12, 13, 14) held by at least one respective socket bolt (17) are inclined vertically backward toward one another at the top, characterised in that the mutually spaced vertical beams (20; 30) each comprise two [-shaped profile members (21, 21'; 31, 31') which are arranged in the same direction as one another and are connected to one another by two adjacent inner legs (25, 25'; 35, 35') which face one another, wherein the individual profile members (21, 21'; 31, 31') are each provided, on the outer legs (23, 23'; 33, 33') which are orientated substantially parallel to the inner legs (25, 25'; 35, 35') and are provided with the vertically spaced recesses (18, 18'; 19, 19'), with a portion (22, 22'; 32, 32') which is bent once with respect thereto and on which the spacer members (40, 40'; 41, 41'; 42, 42'; 43, 43') which are vertically mutually spaced to form the individual columns (10; 10') are arranged and fastened in an overlapping manner.

2. A rack according to claim 1, characterised in that the two profile members (21, 21'; 31, 31') of the individual vertical beam (20; 30) are connected to one another in the region of the outer points of contact (27; 27') of the adjacent inner legs (25, 25'; 35, 35') by a welded joint orientated in the vertical direction of vertical beams (20; 30).

3. A rack according to claim 1, characterised in that the inner adjacent legs (25, 25'; 35, 35') of the profile members (21, 21'; 31, 31') of the two vertical beams (20; 30) are smaller than the outer legs (21, 21'; 31, 31') arranged in parallel with spacing, wherein the inner legs (25, 25'; 35, 35') are dimensioned such that they are each arranged with the front edge corresponding to the inner edge of the recesses (18, 18'; 19, 19').

4. A rack according to claim 1, characterised in that the recesses (18, 18'; 19, 19') which are formed substantially at right angles are each inclined at an angle (α) with respect to the outer edge (26; 36) of the individual vertical beam (20; 30) inclined backwardly at the top, the angle (α) being selected between about 8° and 12°.

5. A rack according to claim 1, with the longitudinal beams (50; 50) which are arranged on either side of the profile members (21, 21'; 31, 31') of the individual columns (10; 10'), are fastened thereon by at least one screw connection and are designed as feet elements (15; 15'), characterised in that the individual screw connection (60, 60') has a first spacer sleeve (55) mounted in the profile members (21, 21'; 31, 31') and a second spacer sleeve (56) penetrating it as well as a threaded bolt (57) arranged therein, by means of which the longitudinal beams (50, 50') spaced from one another by the first spacer sleeve (55) are connected to one another and braced relative to one another.

6. A rack according to claim 5, characterised in that the individual screw, connection (60'') has at least one reinforcing tab (62) arranged slackly between the profile members (21, 21'; 31, 31') and the longitudinal beams (50, 50') or attached to the profile members (21, 21'; 31, 31') and the individual elements are screwed to one another.

## Revendications

1. Râtelier notamment râtelier à bras en porte à faux (100) susceptible d'être chargé d'un côté ou des deux côtés, ayant au moins deux colonnes (10, 10') distantes l'une de l'autre, reliées par des entretoises (16, 16') ainsi que les éléments de pied (15, 15') en forme de bras, qui s'appuient sur le sol, les différentes colonnes (10, 10') comprenant deux supports verticaux (20, 30) qui sont munis chaque fois au niveau des parois latérales (A, A') parallèles entre elles, avec des cavités (18, 18' ; 19, 19') écartées dans la direction verticale pour la fixation amovible d'au moins un bras de support et qui sont reliées par au moins deux organes d'écartement distants dans la direction verticale, de façon que les parois frontales (B, B') des supports verticaux (20, 30) prévus pour servir d'appui aux bras de support (11, 12, 13, 14) maintenus chaque fois par au moins un goujon d'enfichage (17) introduit dans les cavités, dans la direction verticale soient inclinées vers l'arrière et vers le haut,
caractérisé en ce que
les supports verticaux (20, 30) distants l'un de l'autre, et ayant chaque fois une forme en C opposée, avec des branches intérieures (25, 25', 35, 35') opposées, tournées l'une vers l'autre, comprennent des corps profilés (21, 21', 31, 31') reliés, et les différents corps profilés (21, 21', 31, 31') orientés sur les branches intérieures (25, 25', 35, 35') sensiblement parallèles, et les branches extérieures (23, 23', 33, 33') munies de cavités (18, 18' ; écartées dans la direction verticale, comportent chaque fois une pièce (22, 22' ; 32, 32') recourbée une fois, et sur laquelle, sont prévus les organes d'écartement (40, 40', 41, 41', 42, 42', 43, 43'), disposés à distance, verticalement les uns par rapport aux autres pour former les différentes colonnes (10, 10'), en venant prendre par-derrière et en y étant fixés.

2. Râtelier selon la revendication 1,
caractérisé en ce que
les deux corps profilés (21, 21' ; 31, 31') des supports verticaux (20, 30) sont reliés au niveau des points de joint extérieurs (27, 27') des branches opposées (25, 25', 35, 35') par une liaison soudée orientée dans la direction verticale des supports verticaux (20, 30).

3. Râtelier selon la revendication 1,
caractérisé en ce que
les branches intérieures juxtaposées (25, 25', 35, 35') des deux corps profilés (21, 21' ; 31, 31') des deux supports verticaux (20, 30) sont plus petites que les branches extérieures (21, 21' ; 31, 31') distantes parallèlement de celles-ci, et les branches intérieures (25, 25' ; 35, 35') sont dimensionnées pour que celles-ci correspondent chaque fois avec l'arête avant pour l'arête intérieure des cavités (18, 18' ; 19, 19').

4. Râtelier selon la revendication 1,
caractérisé en ce que
les cavités (18, 18' ; 19, 19') sensiblement rectangulaires sont inclinées par rapport à l'arête extérieure (26, 26) inclinée vers l'arrière et vers le haut de chaque support vertical (20, 30) suivant un angle (α), cet angle (α) étant choisi de l'ordre de 8° à 12°.

5. Râtelier selon la revendication 1 avec des supports longitudinaux (50, 50'), des deux côtés du corps profilé (21, 21' ; 31, 31') des différentes colonnes (10, 10') et qui sont reliés par au moins une liaison vissée qui les fixe et sont réalisés comme des éléments de pied (15, 15'),
caractérisé en ce que
l'unique liaison vissée (60, 60') comprend un premier manchon d'écartement (55) prévu dans les corps profilés (21, 21' ; 31, 31') et un second manchon d'écartement (56) traversé par celui-ci et recevant une vis (57) à l'aide de laquelle le support longitudinal (50, 50') prévu écarté par le premier manchon d'écartement (55) est relié serré.

6. Râtelier selon la revendication 5,
caractérisé en ce que
la liaison vissée (60'') comprend au moins une plaque de renforcement (62) prévue entre les corps profilés (21, 21' ; 31, 31 ') et les supports longitudinaux (50, 50') de manière libre et accrochée aux corps profilés (21, 21' ; 31, 31') et les différents éléments sont reliés par vissage.
